# EUROPEAN PATENT APPLICATION

(11) **EP 1 306 848 A1**
(43) Date of publication of application: **02.05.2003**
(21) Application number: 02257295.2
(22) Date of filing: 22.10.2002
(51) Int. Cl.: G11B 27/10, G11B 27/32, G11B 20/12, G11B 19/02, G09B 5/06, G06F 17/30

(54) **Information storage medium having data structure that allows easy searching of text information, and apparatus and method for reproducing the information storage medium**

(30) Priority: 23.10.2001 KR 2001065392; 17.05.2002 KR 2002027350
(71) Applicant: SAMSUNG ELECTRONICS CO., LTD., Suwon-City, Kyungki-do (KR)
(72) Inventor: Chung, Hyun-kwon, Gwangju-gun, Gyeonggi-do (KR)
(74) Representative: Robinson, Ian Michael

(57) **Abstract**

An information storage medium having a data structure that allows easy searching of text data, and an apparatus and a method for playing the information storage medium. The information storage medium includes: AV data (110) that includes audio data and video data, a markup document (e.g. HTML 118) to be displayed together with the AV data, and a reproduction control information file (116) containing text data that has a data structure where the text information is classified into a text to be loaded to a memory and a text not to be loaded to the memory, for easy search. Therefore, the text data can be searched easily and the memory of the reproducing apparatus can be utilized effectively.

## Description

The present invention relates to an information storage medium that supports an interactive mode, and a reproducing apparatus and a reproducing method, and more particularly, to text data in an information storage medium containing AV data that is reproduced and displayed on a display window defined by a markup document, and an apparatus and a method for playing the information storage medium.

A personal computer (PC)-based interactive digital versatile disc (DVD) has been suggested, which can be reproduced in an interactive mode. The interactive DVD refers to the DVD where audio/video (AV) data and a markup document are recorded. The AV data stored in the interactive DVD can be reproduced in two ways, that is, in a video mode or an interactive mode. In the video mode, the AV data is displayed in the same way as video on a regular DVD is displayed, whereas in the interactive mode, the reproduced AV data is displayed in a display window defined by a markup document. If the interactive mode is selected by a user, a browser built in the PC interprets and displays the markup document recorded in the interactive DVD and the AV data selected by the user in the display window defined by the markup document. The representative markup document is an HTML document.

For example, in a movie whose content is AV data, video of the movie is played in the display window of the HTML document, and in the remaining part of the display screen, a variety of supplementary information including scripts, stories, photos of actors and actresses, etc., can be displayed. The supplementary information is displayed in synchronization with a title (AV data). For example, when an actor is on stage, a markup document containing his brief history is invoked and displayed together with his video.

However, in the interactive mode, a data structure of a text data manager provided by the existing DVD-video standard is disadvantageous in that it is not easy to search text data on the markup document and utilize a memory efficiently.

It is an aim of the present invention to provide an information storage medium having a data structure that allows easy searching of text data in an interactive mode, and an apparatus and a method for playing the information storage medium.

It is another aim of the present invention to provide an information storage medium having a data structure that allows efficient utilization of a memory, and an apparatus and a method for playing the information storage medium.

Additional aims and advantages of the present invention will be set forth in part in the description that follows, and, in part, will be apparent from the description, or may be learned by practicing the present invention.

According to a present invention there is provided an information storage medium, a method, and an apparatus, as set forth in the appended claims. Preferred features of the invention will be apparent from the dependent claims, and the description which follows.

In one aspect of the present invention there is provided an information storage medium includes AV data for including audio data and video data. The information storage medium also includes a markup document displayed together with the AV data. The information storage medium also includes a reproduction control information file containing text data which has a data structure where the text information is classified into a text to be loaded into a memory and a text not to be loaded into the memory for easy searching.

The markup document contains a source code that requests a search of the reproduction control information file.

The source code has an application program interface (API) that has a text type, that identifies whether the text information to be searched is to be loaded into the memory, and a text information identification code, as parameters. The source code has the API that searches text data which is an n^{th} previously recorded one from previously searched text data. The source code has the API that searches text data which is the n^{th} next recorded one from previously searched text data.

In an embodiment, the API is a script API, for example, a JAVASCRIPT API.

The reproduction control information file includes multiple item texts containing text data which is classified into text to be loaded into the memory and text not to be loaded into the memory. The reproduction control information file includes multiple item texts, multiple pointers, and a pointer list. The multiple item texts contain text data. The multiple pointers indicate the item texts. The pointer list includes pointers indicating text to be loaded into the memory and pointers indicating text not to be loaded into the memory.

The pointer includes a start address, data length, and an identification code of the item text.

Also according to the present invention there is provided a reproducing apparatus for reproducing an information storage medium including AV data including audio data and video data, a markup document displayed together with the AV data, and a reproduction control information file containing text data that has a data structure where the text information is classified into a text to be loaded to a memory and a text not to be loaded to the memory for easy search. The information storage medium includes a reader, a cache memory, and a presentation engine. The reader reads data from the information storage medium. The presentation engine interprets the reproduction control information file and caches the text information to the cache memory if the text information is to be loaded into the memory.

In one preferred aspect, the presentation engine identifies whether the text data requested by the API on the script source code is to be loaded or not to be loaded into the memory, reads the text data from the cache memory if the text data is to be loaded into the memory, and reads the text data from the information storage medium through the reader or receives the text data from the Internet if the text data is not to be loaded into the memory.

The presentation engine includes a reproduction control module, a markup document/script language interpretation module, and an object interface module. The reproduction control module searches the reproduction control information file. The markup document/script language interpretation module interprets the markup document, and interprets and executes the API recorded in the markup document. The object interface module interfaces with the reproduction control module and the markup document interpretation module through the API.

Further according to the present invention there is provided a method of reproducing an information storage medium including AV data for including audio data and video data, a markup document displayed together with the AV data, and a reproduction control information file containing text data which has a data structure where the text information is classified into a text to be loaded into a memory and a text not to be loaded into the memory for easy search. In the reproducing method, the reproduction control information file is searched for the text information.

In a preferred aspect, in the reproducing method, the text information is searched from the reproduction control information file, and the searched text data is cached in the cache memory. In an aspect, an identification is made as to whether the text information requested by an API on a script source code is to be loaded into the memory, and the text data is read from the memory if the text information is to be loaded into the memory.

For a better understanding of the invention, and to show how embodiments of the same may be carried into effect, reference will now be made, by way of example, to the accompanying diagrammatic drawings in which:
Figure 1 shows a directory structure of a disc, according to an embodiment of the present invention;
Figures 2A and 2B show a data structure of a reproduction control information file according to an embodiment of the present invention;
Figure 3 shows a data structure of a text data manager, according to an embodiment of the present invention;
Figure 4 shows an embodiment of the text data manager shown in Figure 3;
Figure 5 shows an embodiment of the text data information (TXTDTI) shown in Figure 4;
Figure 6 shows an embodiment of the IT_TXT_SRP shown in Figure 4;
Figure 7 is a block diagram of a reproducing apparatus, according to an embodiment of the present invention;
Figure 8 shows an operation procedure of a presentation engine, according to an embodiment of the present invention in detail; and
Figure 9 is a flowchart explaining a reproducing method, according to an embodiment of the present invention.

Reference will now be made in detail to the present preferred embodiments of the present invention, examples of which are illustrated in the accompanying drawings, wherein like reference numerals refer to the like elements throughout. The embodiments are described below in order to explain the present invention by referring to the figures.

A markup document defined in this specification means not only a document prepared in a markup language such as hypertext markup language (HTML) and extensible markup language (XML), but also a document linked with or including a source code or execution code prepared in JAVASCRIPT and JAVA, and further means a file used being linked to or inserted into the markup document.

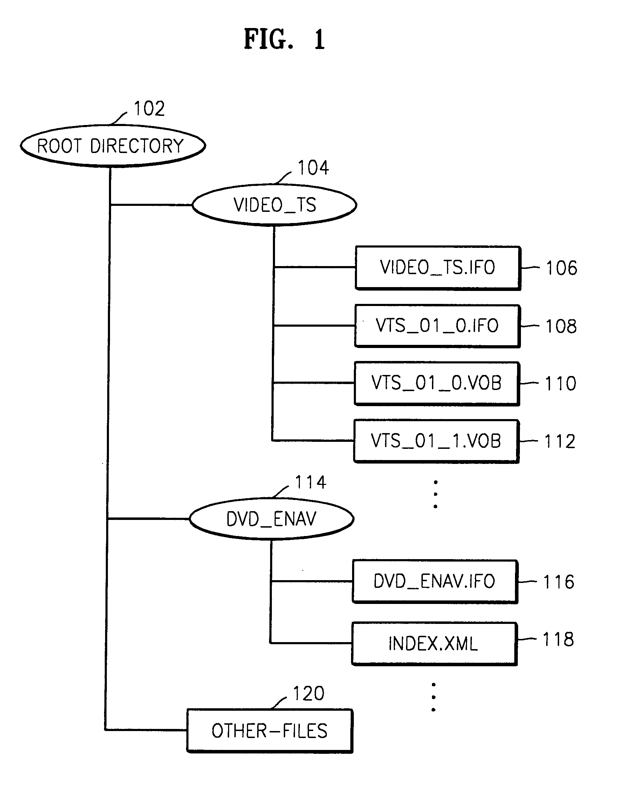

Figure 1 shows a directory structure of a DVD, according to an embodiment of the present invention.

With reference to Figure 1, a root directory 102 includes a video directory, VIDEO_TS 104, which contains AV data. In VIDEO_TS 104, there is a file VIDEO_TS.IFO 106 that contains reproduction control information on all of the video titles. In the file VIDEO_TS.IFO 106, language information is designated as a default value with regard to the video title. In addition, there is the file VTS_01_0.IFO 108 that contains reproduction control information on a first video title set. In addition, there are the files VTS_01_0.VOB 110 and VTS_01_1.VOB 112, ... ., which are video objects (VOBs) that make up video title sets. In each VOB, there is a video object unit (VOBU) that contains a navigation pack, and at least one of both a video pack and an audio pack. For more detailed configuration information, the DVD-Video standard "DVD-Video for Read Only Memory disc 1.0" should be referred to.

In the root directory, there is also an interactive directory, DVD_ENAV 114, which contains the information for supporting the interactive mode. The DVD_ENAV 114 contains DVD_ENAV.IFO 116, which is a reproduction control information file according to an embodiment. For example, the reproduction control information file includes definition and configuration of the interactive directory, the number of included titles, basic information on the titles, information on languages, captions and fonts used for the titles, markup document display information such as resolution and color, and information on a copyright. Text data of the information is recorded in the data structure according to the present invention, and the detailed structure will be described below. Further, the DVD_ENAV 114 contains the file INDEX.XML 118 for displaying an initial start markup document, and other markup documents. In addition, in the DVD_ENAV 114, a file, which is to be linked to and displayed together with markup documents such as the INDEX.XML 118, can be stored. Further, other files 120 may be included in the root directory.

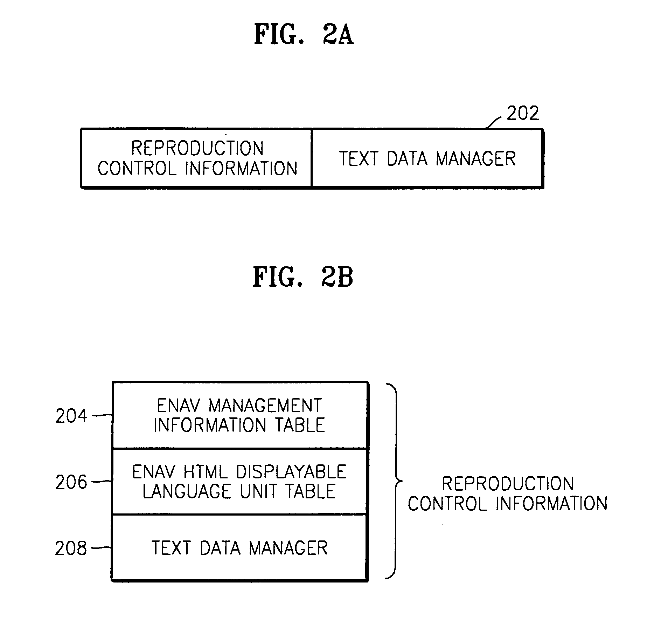

Figures 2A and 2B show a directory structure of a reproduction control information file according to an embodiment of the present invention.

With reference to Figure 2A, the reproduction control information file DVD_ENAV.IFO 116 contains a text data manager 202. With reference to Figure 2B, the reproduction control information file DVD_ENAV.IFO 116 can include an ENAV management information table 204, an ENAV HTML displayable language unit table 206,and a text data manager 208. In an embodiment, text data manager 202 and text data manager 208 refer to the same thing. The ENAV management information table 204 is a management table designed to manage the ENAV HTML displayable language unit table 206 and the text data manager 208. The ENAV management information table 204 can include an identifier of the reproduction control information file, the size of the reproduction control information file, a DVD identifier, a start address and an end address of the ENAV HTML displayable language unit table, and a start address and an end address of the text data manager. The ENAV HTML displayable language unit table 206 designates the types of displayable languages for the markup document. However, because the table that designates the types of displayable languages for a markup document is not within the scope of the present invention, a detailed explanation about the table will be omitted.

In the text data manager 208, there is a data structure that contains the text data which allows for more efficient searching according to the present invention.

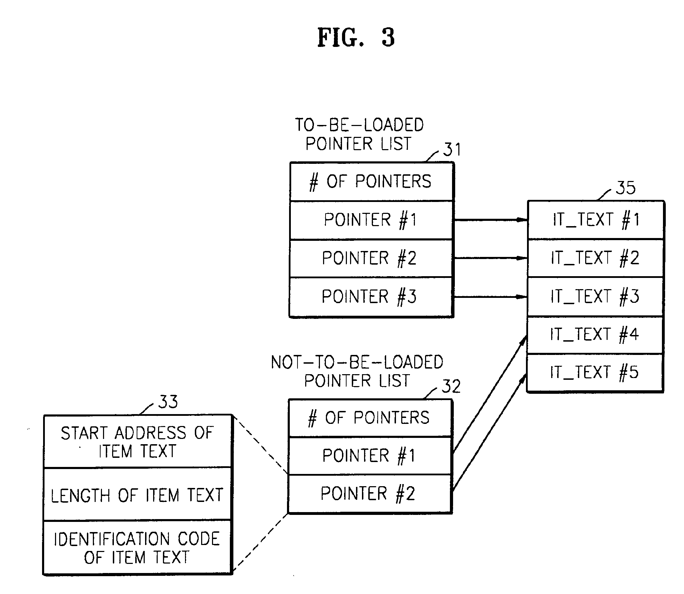

Figure 3 shows a data structure of the text data manager 208.

With reference to Figure 3, text data manager 208 contains multiple item texts IT_TEXT 35 where text data is recorded. In addition, there are pointer lists 31 and 32 including multiple pointers that indicate the time text IT_TEXT 35. The pointer lists, according to an embodiment of the present invention, are classified into memory-loadable text data and memory-unloadable text data. The reference number 31 indicates the list of the pointers indicating the item text IT_TEXT 35 where the text data to be loaded to the memory is recorded. The reference number 32 indicates the list of the pointers indicating the item text IT_TEXT 35 where the text data not to be loaded to the memory is recorded. Each pointer includes a start address of an item text, a data length, and an identification code. That is, a separate item text search table is prepared, which helps to identify whether the text data is to be loaded to the memory or not.

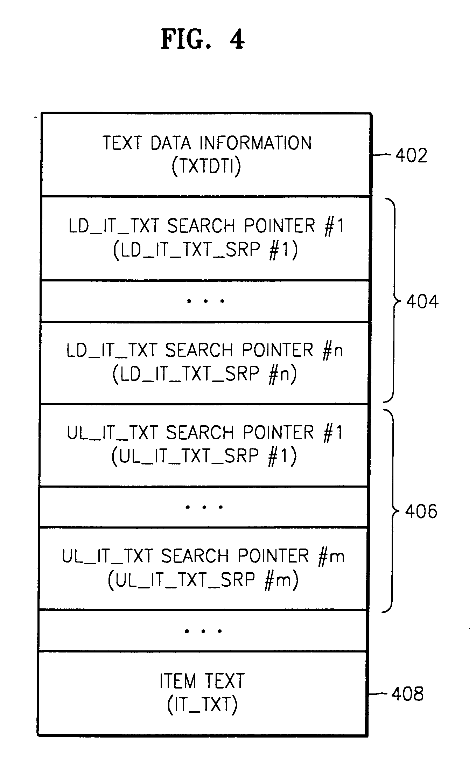

Figure 4 shows an embodiment of the text data manager 208 shown in Figure 3.

With reference to Figure 4, in the text data manager, text data information (TXTDTI) 402, which contains header information about pointers, is first stored. The test data information is followed by LD_IT_TXT_SRP #n 404, pointers which indicate an item text loadable to a memory, and UL_IT_TXT_SRP #m 406, pointers which indicate an item text unloadable to the memory. Also included are IT_TXT 408 that are item texts.

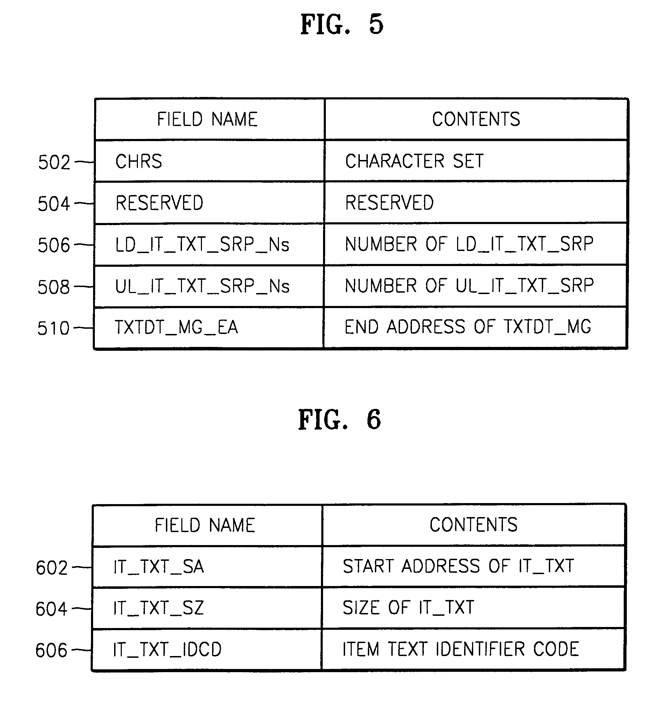

Figure 5 shows an embodiment of TXTDTI 402 shown in Figure 4.

With reference to Figure 5, the TXTDTI field 402 includes CHRS 502, a reserved field 504, LD_IT_TXT_SRP_Ns 506, UL_IT_TXT_SRP_Ns 508, and TXTDT_MG_EA 510. CHRS 502 contains a code for designating a character set of a character used in the item text. LD_IT_TXT_SRP_Ns 506 denotes the number of pointers that indicate the item text that is to be loaded to the memory. UL_IT_TXT_SRP_Ns 508 denotes the number of pointers that indicate the item text that is not to be loaded to the memory. TXTDT_MG_EA 510 indicates the end address of the text data manager.

Figure 6 shows an embodiment of the IT_TXT_SRP fields 404 and 406 shown in Figure 4.

With reference to Figure 6, the IT_TXT_SRP fields 404 and 406 include IT_TXT_SA 602, IT_TXT_SZ 604, and IT_TXT_IDCD 606. IT_TXT_SA 602 indicates the start address of the item text. IT_TXT_SZ 604 indicates the size of the item text. IT_TXT_IDCD 606 indicates the identification code of the item text.

Here, the size of the to-be-loaded text data of the entire memory should be determined. If IT_TXT_SA 602 of a first to-be-loaded item text is searched through the pointer indicating a first to-be-loaded item text, IT_TXT_SA 602 of a first not-to-be-loaded item text is searched through the pointer indicating a first not-to-be-loaded item text and, the size of the to-be-loaded text data can be calculated using the difference between the IT_TXT_Sas 602. Further, the length of the to-be-loaded/not-to-be-loaded text data is limited to several characters. The item text is described and generated in the designated character set.

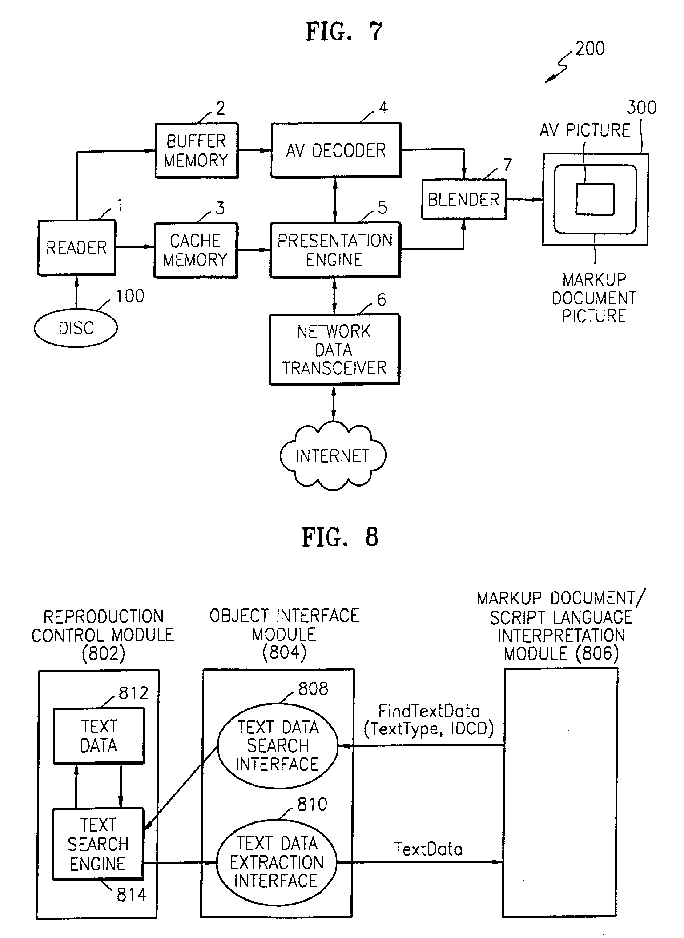

Figure 7 is a block diagram of a reproducing apparatus 200 according to an embodiment of the present invention.

With reference to Figure 7, the reproducing apparatus 200 decodes AV data recorded in the disc 100, reproduces it as an AV data stream and displays the AV data stream on the display window defined by the markup document in the interactive mode. The reproducing apparatus 200 includes a reader 1, a buffer memory 2, a cache memory 3, an AV decoder 4, a presentation engine 5, and a blender 7.

The reader 1 reads a markup document or AV data from the disc 100. The buffer memory 2 buffers the AV data read by the reader 1. The cache memory 3 caches the markup document read by the reader 1. Especially, the cache memory 3 caches memory-loadable text data among the text data stored in the reproduction control information file. The presentation engine 5 interprets the read markup document and identifies the location of the display window, then displays the AV data stream output by the AV decoder 4 on the display window. Further, the presentation engine 5 searches the reproduction control information file for memory-loadable text data and caches the memory-loadable text data on the cache memory 3. If an application program interface (API) on a script source code requests text data, the presentation engine 5 identifies whether the text data is loadable or not loadable to the memory. If the text data is loadable to the memory, the presentation engine 5 reads the text data from the cache memory 3. If the text data is not to be loaded to the memory, the presentation engine 5 reads the text data from the disc 100 through the reader 1 or from the outside. The blender 6 blends the decoded AV data and the markup document, and outputs them to the display device 300.

Figure 8 shows an operation procedure of the presentation engine.

With reference to Figure 8, from the perspective of software, the presentation engine 5 includes a reproduction control module 802, an object interface module 804, and a markup document/script language interpretation module 806, which connects an API and the object interface module. API is a special method predetermined on a script language in which a requested control operation is written when a source code written in a script language is interpreted by the script language interpretation module and then executed.

The reproduction control module includes text data 812 made up of item text, and a text search engine 814 designed to search the text data 812. The text search engine 814 searches text data, DVD_ENAV.IFO 116, which has the data structure according to the embodiment.

The object interface module 804 performs interfacing in which the script language interpretation module 806 transfers parameters and methods defined on an object interface on the basis of an API to the reproduction control module. To do so, the object interface module 804 has a text data search interface 808 and a text data extraction interface 810. The text data search interface 808 sends a parameter provided through the API by the markup document/script language interpretation module 806, that is, the information about the text data 812 to be searched, to the text search engine 814. The text data extraction interface 810 transmits the text data 812 searched by the text search engine 814 to the markup document/script language interpretation module 806.

The markup document/script language interpretation module 806 interprets and displays the markup document. That is, the markup document/script language module 806 analyzes the markup document and performs text data searching if an API for searching for the text data 812 is called. The text data 812 is for searching the AV data, and displaying the text information (for example, names of actors and scripts, and etc.) related to the AV screen. The parameters of the API includes the information that identifies whether the item text is to be loaded or not to be loaded to the memory, that is, text type (textType) and the identification code (IDCD) of the item text which contains text information to be searched. To be more specific, the markup document/script language interpretation module 806 identifies the identification code (IDCD) of the text data upon the request of an API on a script source code, and sends the textType and the IDCD to the reproduction control module 802 via the object interface module 804 through the FindTextData, API. The navigation module searches the relevant text search table depending on the received text type. If the navigation module finds the identification code identical to the identification code to be searched, it searches the start address of the relevant item text, fetches the requested text data and sends the text data back to the markup document/script language interpretation module 806 through the object interface module 804. Likewise, if the navigation module uses FindPreviousData(n) and FindNextData(n), it can find the text data which is an n^{th} previously recorded one or which is an n^{th} next recorded one at the position where the previously found text data is recorded.

The API used in the embodiment will be described in detail.

### <Example of API>

### 1. Method

### 1.1. .FindTextData(textType,IDCD)

1) Summary
   A text data (character string) is searched according to the parameter provided by the text data manager.
2) Parameter
   - textType =: 0 : item text loadable to the memory
   1 : item text not loadable to the memory
   - IDCD :: identification code
3) Example
   obj.FindTextData(0,30) // Find the item text whose
   IDCD is 30 out of the item texts loadable to the memory.

### 1.2. .FindPreviousData(n)

1) Summary
   N^{th} previously recorded item text is searched at the location where the previously found item text is recorded.
2) Parameter
   n : N^{th} previous text from the previously found item text
3) Example
   obj.FindPreviousData(10) // Find the item text which is 10^{th} previously recorded one from the previously found item text.

### 1.3. .FindNextData (n)

1) Summary
   N^{th} next recorded item text is searched at the location where the previously found item text is recorded.
2) Parameter
   n : N^{th} next text from the previously found item text
3) Example
   obj.FindNextData (10) // Find the item text which is 10^{th} next recorded one from the previously found item text.

### 2. Property

### 2.1. .TextData

1) Summary
   Indicates the character string of the searched item text.
2) Return value
   Character String.
3) Example
   x = obj.TextData // Copy the searched text data on x.

### 2.2. .TextDataIDCD

1) Summary
   Indicates the identification code value of the searched item text.
2) Return value
   Number
3) Example
   x = DvdVideo.TextDataIDCD // Copy the IDCD of searched text on x.

Based on the above configuration, the reproducing method according to an embodiment of the present invention will be described below.

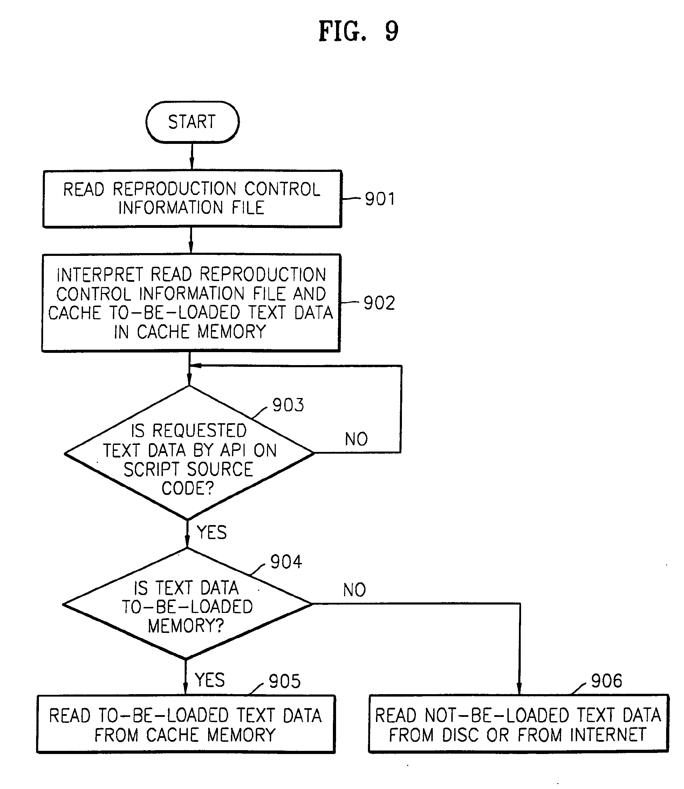

Figure 9 is a flowchart explaining a reproducing method.

With reference to Figure 9, a reproducing apparatus searches and reads the reproduction control information file recorded on the disc 700, at 901. At 902, the reproducing apparatus caches only memory-loadable text data in the cache memory 3 by interpreting the read reproduction control information file. If the API on a script source code within the displayed markup document requests text information at 903, the reproducing apparatus identifies whether the requested text information is to be loaded to the memory at 904. If the text information is to be loaded to the memory, the reproducing apparatus 200 reads the relevant text data from the cache memory 3, at 905. If the text information is not to be loaded to the memory, the reproducing apparatus reads the relevant text data from the disc 100 or from the outside, at 906.

The above reproducing method can be implemented as a computer program. The codes and code segments making up the program can be inferred easily from the computer program in a relevant field. In addition, the program is saved in a computer readable medium, and read and executed by the computer to be implemented as a method of recording text information to and reproducing it from an information storage medium. The computer readable medium includes magnetic recording media, optical recording media, and carrier wave media.

As described above, the present invention provides the information storage medium having a data structure that allows easy searching of text data, and an apparatus and a method for playing the information storage medium. Therefore, the memory of the reproducing apparatus can be utilized efficiently. In addition, the user can search easily the huge amounts of the text information as if he is browsing the web. As a result, if the markup document of the same content is provided in multiple languages, or the text information such as the script of the video title is provided in multiple languages, the data structure according to the present invention helps to record the text data.

Especially, according to the present invention, a hash table structure, a linked list structure, and a binary tree structure can be applied for easy data searching.

Although a few embodiments of the present invention have been shown and described, it would be appreciated by those skilled in the art that changes may be made in these embodiments without departing from the scope of the invention of which is defined in the claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information storage medium comprising:
AV data (110) including audio data and video data;
a markup document (118) which has text information and is displayed together with the AV data; and
a reproduction control information file (116) containing text data which has a data structure where the text information is classified into a text to be loaded to a memory and a text not to be loaded to the memory for easy search.

2. The medium of claim 1, wherein the markup document (118) contains a source code that requests a search of the reproduction control information file (116).

3. The medium of claim 2, wherein the source code has an Application Program Interface (API) that has a text type, which identifies whether the text information to be searched is to be loaded to the memory, and a text information identification code as parameters.

4. The medium of claim 2 or 3, wherein the source code has the API that searches text data that is an n^{th} previously recorded one and/or n^{th} next recorded one from the previously searched text data.

5. The medium of claim 3 or 4, wherein the API is written in a script language.

6. The medium of any preceding claim, wherein the reproduction control information file (116) includes multiple item texts containing text data which is classified into text to be loaded to the memory and text not to be loaded to the memory.

7. The medium of any preceding claim, wherein the reproduction control information file (116) comprises:
multiple item texts (35) for containing text data;
multiple pointers (33) for indicating the item texts; and
a pointer list (31,32) where a first group of the multiple pointers indicates text to be loaded to the memory and a second group of the multiple pointers indicates text not to be loaded to the memory.

8. The medium of claim 7, wherein each of the multiple pointers (33) includes a start address, data length, and an identification code of the item text.

9. A reproducing apparatus for reproducing an information storage medium including AV data (110) including audio data and video data, a markup document (118) displayed together with the AV data, and a reproduction control information file (116) containing text data that has a data structure where the text information is classified into a text to be loaded to a memory and a text not to be loaded to the memory for easy search, the reproducing apparatus comprising:
a reader (1) that reads data from the information storage medium;
a cache memory (3); and
a presentation engine (5) that interprets the reproduction control information file and caches the text information to the cache memory if the text information is to be loaded to the memory.

10. The reproducing apparatus of claim 9, wherein the presentation engine (5) identifies whether the text data requested by the API on the script source code is to be loaded or not to be loaded to the memory, and reads the text data from the cache memory (3) if the text data is to be loaded to the memory or reads the text data from the information storage medium through the reader (1) if the text data is not to be loaded to the memory.

11. The reproducing apparatus of claim 9 or 10, further comprising:
a network data transceiver (6) for receiving a markup document from the Internet, wherein if the text data is not to be loaded to the memory, the presentation engine (5) receives text data from the Internet via the network data transceiver (6).

12. The reproducing apparatus of claim 9, 10 or 11, wherein the presentation engine (5) comprises:
a reproduction control module (802) that searches the reproduction control information file;
a markup document/script language interpretation module (806) that interprets the markup document and also interprets and executes the API in a script language recorded in the markup document; and
an object interface module (804) that interfaces the reproduction control module with the markup document/script language interpretation module through the API.

13. The reproducing apparatus of claim 12, wherein the reproduction control module (802) includes a text search engine (814) that searches the text data included in the reproduction control information file (116), wherein the markup document/script language interpretation module (806) interprets and executes the markup document and the script source code, and wherein the object interface module (804) sends a text type and an identification code of the text information to be searched, which is provided by the markup document/script language interpretation module through the API, to the text search engine (814), and transmits the searched text data from the text search engine (814) back to the markup document/script language interpretation module (806).

14. The reproducing apparatus of claim 13, wherein, if the text search engine (814) searches a relevant text search table according to the text type sent by the object interface module, and finds the identification code identical to the identification code to be found, the text search engine searches the start address of the relevant item text and reads the text data.

15. The reproducing apparatus of claim 13 or 14, wherein the text search engine (814) reads n^{th} previously or next recorded text data from the location where the previously found text data is recorded.

16. The reproducing apparatus of any of claims 9 to 15, further comprising:
a buffer memory (2) buffering the read AV data;
an AV decoder (4) decoding the read AV data; and
a blender unit (7) blending the decoded AV data so that the AV data is displayable on the display window defined by the markup document.

17. A method of reproducing content from an information storage medium that includes AV data (11), a markup document (118) to be displayed together with the AV data, and a reproduction control information file (116) containing text data that has a data structure where the text information is classified into a text to be loaded to a memory and a text not to be loaded to the memory for easy search, the reproducing method comprising:
searching the reproduction control information file (116) for the text information; and
reading the text information.

18. The method of claim 17, wherein the searching step comprises:
searching the reproduction control information file (116) for the text information; and
caching the searched text data in a cache memory (3).

19. The method of claim 18, wherein the step of searching the reproduction control information file further comprises:
identifying whether the text information requested by an API on a script source code is to be loaded to the memory (3); and
reading the text data from the memory (3) if the text information is to be loaded to the memory.

20. The method of claim 19, wherein the step of searching the reproduction control information file (116) further comprises reading the text data from the information storage medium if the text data is not to be loaded to the memory (3).

21. The method of claim 19 or 20, wherein the step of searching the reproduction control information file (116) further comprises receiving the text data from the Internet if the text data is not to be loaded to the memory (3).

22. An apparatus, comprising:
a reader unit (1) to read audio/video (AV) data (110), a markup document (118), and a reproduction control information file (116) from an interactive digital versatile disc (DVD), wherein the markup document (118) comprises text information and a source code to request a search for the text information, and wherein the reproduction control information file (116) classifies the text information as to be loaded into a memory (3) or not to be loaded into the memory (3);
a cache memory (3) to store the text information that is to be loaded into the memory; and
a presentation engine (5) to search the cache memory (3) for the text information that is stored in the cache memory.

23. The apparatus of claim 22, wherein the presentation engine (5) is implemented in software.

24. The apparatus of claim 22 or 23, wherein the presentation engine comprises:
a reproduction control module (802) to search the markup document (118);
a markup document/script language interpretation module (86) to interpret the markup document for display; and
an object interface module (804) to provide an interface between the reproduction control module and the markup document/script language interpretation module.

25. The apparatus of any of claims 22 to 24, wherein the reproduction control information file (116) includes a text data manager, which includes a data structure for easy searching.

26. The apparatus of claim 25, wherein the data structure is a hash table, a linked list, or a binary tree.

27. The apparatus of claim 25 or 26, wherein the data structure comprises:
a first plurality of pointers (31) to a first portion of the text information that is classified as to be loaded into the memory; and
a second plurality of pointers (32) to a second portion of the text information that is classified as not to be loaded into the memory.
